Europäisches Patentamt

(19) European Patent Office

Office européen des brevets

(11) **EP 0 805 411 A2**

(12) **EUROPEAN PATENT APPLICATION**

(43) Date of publication:
05.11.1997 Bulletin 1997/45

(51) Int. Cl.$^6$: **G06K 9/38**

(21) Application number: 97107025.5

(22) Date of filing: 28.04.1997

(84) Designated Contracting States:
DE FR GB IT SE

(30) Priority: 30.04.1996 JP 134256/96

(71) Applicant:
**Murata Kikai Kabushiki Kaisha
(Murata Machinery, Ltd.)
Minami-ku Kyoto-shi Kyoto-fu (JP)**

(72) Inventor: **Hayashi, Tatsuo
Ichinomiya-shi, Aichi (JP)**

(74) Representative:
**Liedl, Christine, Dipl.-Chem. et al
Albert-Rosshaupter-Strasse 65
81369 München (DE)**

(54) **Image recognition whereby the binarization threshold is determined by image substraction**

(57)     A target article is photographed using a slight light to obtain positive and negative images P and N of the article. Then, two difference images P-N and N-P are produced and the larger difference image, P-N or N-P, is selected. The larger one undergoes a smoothing operation and 2 to 3 bits is subtracted therefrom to provide a threshold image. The difference image P-N is compared with the threshold image and "1" and "0" are assigned to the difference image based on comparison. Specifically, "1" is assigned to a pixel of the difference image if the pixel is brighter than a corresponding pixel of the threshold image "0" is assigned to the pixel if it is darker than the threshold image. A space code image is accordingly obtained.

FIG. 3F

FIG. 3G

FIG. 3A  FIG. 3B

FIG. 3C

FIG. 3D

FIG. 3E

EP 0 805 411 A2

**Description**

Background of the Invention

Technical Field

The present invention relates to an image recognition device used in the control of unmanned transport cars, depalletizers, picking robots, machining centers and the like and more specifically relates to an image recognition device which recognizes a target article using a threshold image in converting an image photographed using a slit pattern into binary.

Background Art

A depalletizer, a picking robot or the like handles an article to be transported or picked, for example the work, while it is recognizing the target article by an associated image recognition device. Instead of normal light-dark imagery, the image recognition device uses a space code image. Specifically, the image recognition device illuminates the target article by a projector while changing a slit pattern, takes a picture of the light reflected from the upper surface of the article by a CCD camera or the like and converts this image into a space code image in binary. The obtained space code image is then image processed and the shape of the work is determined.

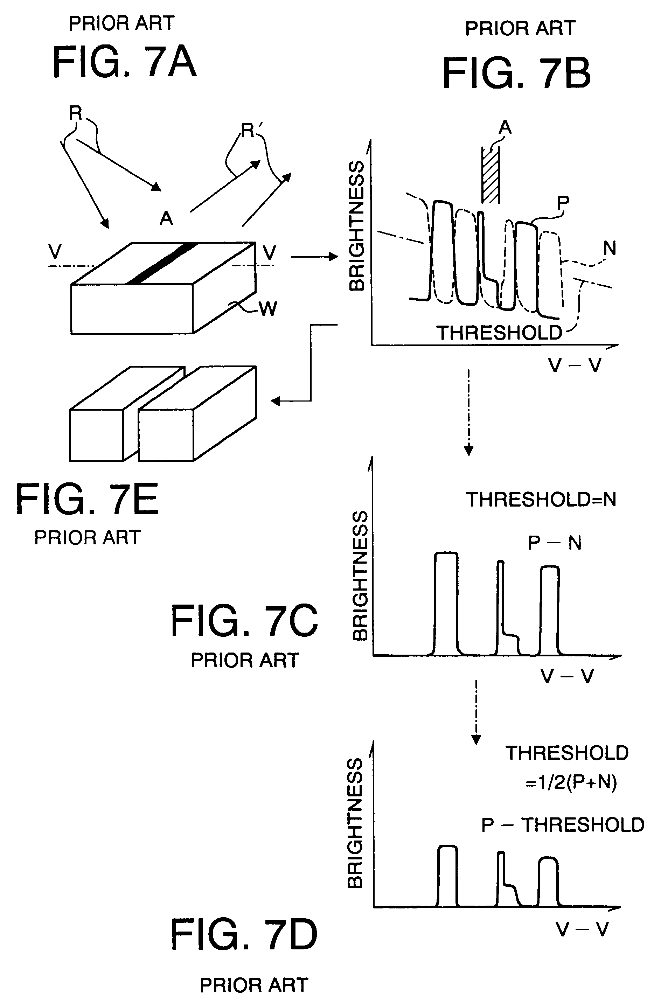

A threshold image is necessary for binary conversion. The inventor noted the following in this conversion process. Referring to Fig.7A of the accompanying drawings, it should be supposed that the work W is illuminated from the direction of the arrows R and the reflected light R' is photographed. Taking the v-v direction as the direction in which the space will be coded, the brightness of the positive image P and negative image N (the negative image is the image photographed by reversing the slit pattern with the same resolution) along this direction is illustrated in Fig.7B. Each of the positive and negative images P and N slight declines as the v increases because the reflected light R' becomes weaker or darker as the distance between the projector and the illuminated part of the work W increases. In short, even when the reflectance of the work W is uniform and does not depend on the location, the brightness of the image changes along the direction v-v. One conventional way of determining a threshold image is to photograph the positive and negative images of a work-loading plane while there is no work W on it and to calculate an average image, and this average image is used as the threshold (as indicated by the single-dot chain line in Fig.7B). Then, conversion of the positive image to binary is carried out by allocating pixels brighter than the threshold a 1 and pixels darker a 0.

However, if there is a pattern A on the work W as shown in Fig.7A, the positive image P is darker than the threshold image in the area of the pattern A as understood from Fig.7B and therefore correct binary conversion cannot be expected. This shows why a threshold image must be produced using the work W itself. The changes or fluctuations in reflectance of the work W surface and minute indentations will be understood for the first time by photographing the work W. Producing a threshold image beforehand would cause an error or noise in image recognition due to, for instance, the pattern A or concave/convex on the work W. Such a noise results in mis-recognition as shown in Fig.7E, i.e., a single work W would then be mistakenly recognized as two works.

However, simply preparing the threshold image from the work W does not solve the problems. Specifically, even if a threshold image is obtained using the work W itself, only part of the threshold image can be utilized. For example, as shown in Fig.7C, it should be supposed that the negative image N is taken as the threshold image and image recognition is carried out using the difference between this threshold and the positive image P, in short the difference P - N. The brightness of the difference image (P - N) in the area of pattern A also becomes too small and mistaken recognition occurs again. Another approach is shown in Fig.7D. The average value of the positive image P and negative image N ( 1/2(P+N) ) is taken as the threshold image. However, there is still a possibility of mistaken recognition at the pattern A. Furthermore, since the threshold value is the middle value between the positive image P and negative image N, an error would be included in the binary image if noise of more than 1/2 the difference (or amplitude) between the positive image and negative image is generated during image recognition.

Summary of the Invention

It is an object of the present invention to propose an image recognition device that is able to correctly recognize the shape of the article even if the reflectance of the article surface is non-uniform.

Another object of the present invention is to propose an image recognition device that does not require operations producing the threshold image beforehand.

Still another object of the present invention is to provide an image recognition device which reduces the amount of calculation in order to determine the threshold image.

A yet another object of the invention is to provide an image recognition device which reduces noise generated in the space code image.

Another object of the invention is to provide an image recognition device which reduces the amount of data processing required for generation of the threshold image and the memory required for storage of these data.

According to one aspect of the present invention, there is provided an image recognition device comprising: means for preparing a plurality of positive and negative images of a target article using a plurality of slit light patterns respectively; means for preparing a threshold image from a combination of first and second difference images for each slit pattern, the first difference image obtained by subtracting a negative image from a positive image of the target article and the second difference image obtained by subtracting the positive image from the negative image for the each slit light pattern; means for comparing the threshold image with the first or second difference image for the each slit light pattern; and means for producing a space code image of the article based on comparison results.

The number of slit patterns SPN, in short, the bit width of the resolution of the space code image may be from, for example, 2 to 24, and preferably from 4 to 12. It should be noted that the slit pattern is not limited to a simple binary pattern and may be a gray coded pattern. The decision of whether which of a pair of slit patterns of the same resolution is the positive and which is the negative and similarly which of a pair of images is the positive image and which is the negative image is a relative rule and has no particular relevance.

In the present specification, combination or synthesis of images means that a single image cannot determine a ultimate image but two image can only determine it. The ultimate image is of course a function of these two images.

Furthermore, the image data for a monochrome image is larger the brighter the image, and for color images, is defined along each axis such as R, G, B and is larger the brighter with respect to a single axis. Accordingly, the size of the image data may occasionally have a complementary relationship with the size of the data in the actual memory such as the frame memory or the like in this specification. In principle, image data means data from every pixel but it may represent collective or average data from a plurality of pixels in a particular area.

Since the threshold image is determined by the both the subtraction of the negative image from the positive image and the positive image from the negative image, the threshold is reduced in the area of the pattern A of Fig.7B and therefore it is feasible to correctly convert the photographed image to binary even if the reflectance of the article surface is not uniform. Also, the influence of a light not originated from a light projector of the image recognition device is removed in the courser of subtraction between the positive and negative images and does not arise in the threshold image and the difference image of the object converted to binary.

Preferably, the threshold preparation means includes maximum value calculation means for determining whether the first difference image is greater than the second difference image. The threshold image may be produced using the maximum value of two difference images. The maximum value may be calculated by comparisons of two images at each pixel or by smoothing the data in the range of a plurality of pixels before comparison and comparing them in the form of unit larger than one pixel. In either case, a necessary processing is comparison of two values and selection of a larger one. It is unnecessary to calculate an average value or the like. Accordingly, the amount of processing for preparation of the threshold value is minimized. It should be noted that the maximum value does not need to be the threshold value and it is preferable, in consideration of a detection margin, to remove the noise from the maximum value after smoothing or to subtract a certain value from the maximum value.

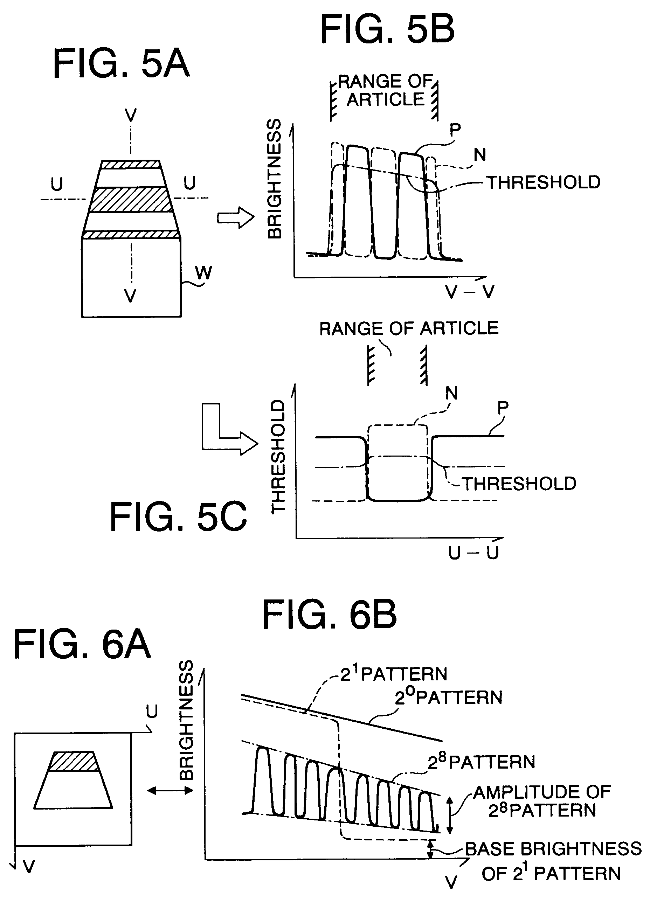

Preferably, a single threshold image is prepared using a slit light pattern of a greatest resolution and this threshold image is utilized for comparison for all of the slit light patterns. If only a single threshold image is needed, the memory capacity necessary for memorization and data processing necessary for the production of the threshold image is reduced. The slit pattern of the greatest resolution is the one having the most complicated slit pattern. The amplitude between the positive and negative images, in short, the absolute values of the difference between them is reduced when the space coding resolution increases as shown in Fig.6B (the space coding resolution increases from $2^0$ pattern to $2^8$ pattern). Thus, by producing a threshold image using a slit pattern of maximum resolution and employing it as the sole threshold image, the threshold image is originally slightly darker than the images photographed using lower resolution slit patterns, i.e., the threshold image is never brighter excessively.

Brief Description of the Drawings

Figure 1 illustrates the arrangement of the image recognition device according to the present invention.

Figure 2 illustrates a schematic view of the construction of the image recognition device shown in Fig.1.

Figures 3A through 3E illustrate production of the threshold image according to the present invention.

Figures 3F and 3G illustrate another examples of threshold image, respectively.

Figures 4A through 4E show production of the space code image.

Figures 5A through 5C illustrate the positive and negative images of the present invention.

Figures 6A and 6B illustrate the amplitudes of the positive and negative images produced in particular patterns.

Figures 7A through 7E illustrate production of the threshold image by a conventional device and method.

Detailed Description of the Preferred Embodiments

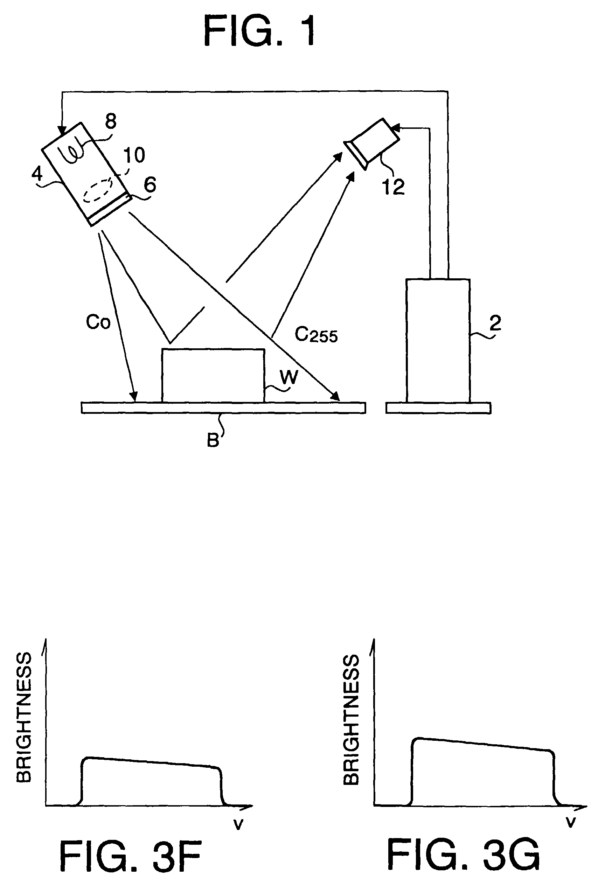

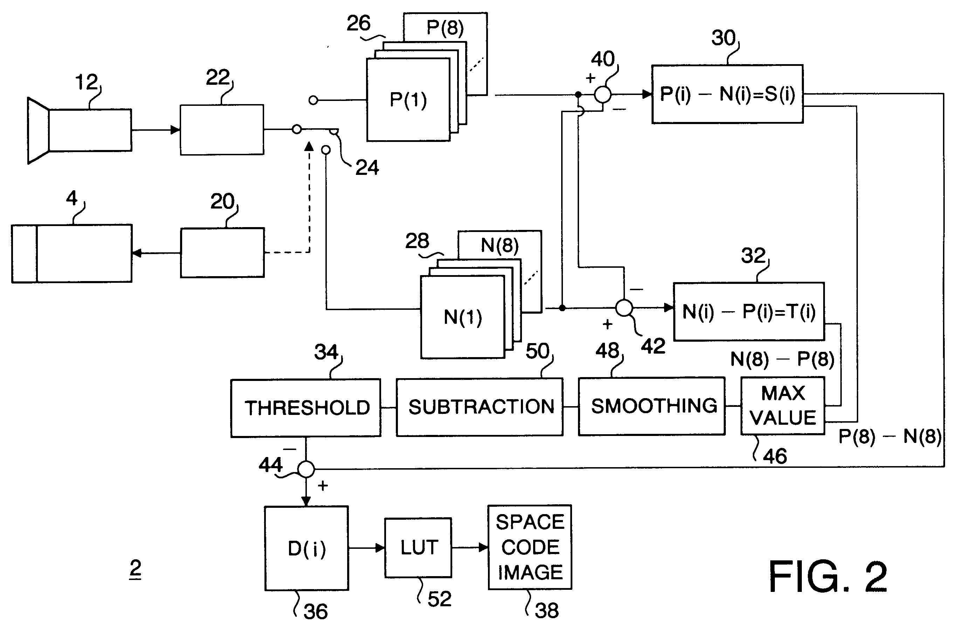

Figs. 1 through 6 show an embodiment of the present invention. Fig.1 illustrates the arrangement of the image recognition device with W being a work (i.e., object or target article) to be recognized positioned on a pallet B for example. A reference numeral 2 designates an image recognition device provided with a projector 4. The projector 4 includes a liquid crystal shutter array 6, light source 8 and lens 10. The projector 4 may be any type of conventional projectors as long as it is able to illuminate the object and change the slit pattern (hereafter, simply referred to as "pattern"). A reference numeral 12 designates a CCD camera in this particular embodiment but any suitable camera other than a CCD camera may be equally used. The illumination space defined by the projector 4 is divided into, for example, space segments C0 - C255, each of which having a 8-bit width. The reflected light is received by the camera 12 and allotted a space code value of 0 to 255 with respect to the upper surface of the work W. The image recognition device determines the position of the work W from the space code image and then a depalletizer or the like (not shown) picks up the work.

Fig.2 illustrates the construction of the image recognition device 2 of the present embodiment. A reference numeral 20 designates a projector control which controls the liquid crystal shutter array 6 and light source 8 of the projector 4. A reference numeral 22 designates a control for the camera 12. A switch 24 is arranged at the output of the camera control 22 so that it is possible to exchange the image data input destination between a positive image side and a negative image side by a signal from the projector control unit 20. Reference numerals 26, 28, 30, 32, 34, 36 and 38 are one group of frame memories, each having for example an 8 bit data width, and are arranged with only the necessary pieces. It should be noted that as far as no errors and inconsistency are generated in data processing, a single piece of frame memory may be used for a plurality of purposes or some of the illustrated frame memories may be omitted.

Reference numerals 40, 42 and 44 designate difference calculators respectively and are examples of the subtraction means. A reference numeral 46 designates a maximum value calculation unit which compares two difference images provided from the two frame memories 30 and 32 and outputs the larger value of data for each pixel. A reference numeral 48 designates a smoothing unit which smooths the output from the maximum value calculation unit 46 using a filter of such as 3x3 to 5x5 type or the like. A reference numeral 50 designates a subtraction unit which subtracts, for example, 2 to 3 bits from the threshold upon the output of the smoothing unit 48. The maximum value calculation unit 46, smoothing unit 48 and subtraction unit 50 constitute in combination the synthesis means. The post-processed data is memorized in the frame memory 34 as data for each pixel of the threshold image.

The threshold image is subtracted from the difference image S(i) of the positive image P(i) and negative image N(i) obtained in case of the slit pattern No. i and the resulting difference image D(i) is memorized in the frame memory 36. The pixel value of this image is compared to the value in the look-up table or LUT 52 and a "1" is output for pixels higher than this value and a "0" is output for pixels less. This forms the value of the i'th bit plane of the space code image. In this way, a space code image of 8 bit width is produced.

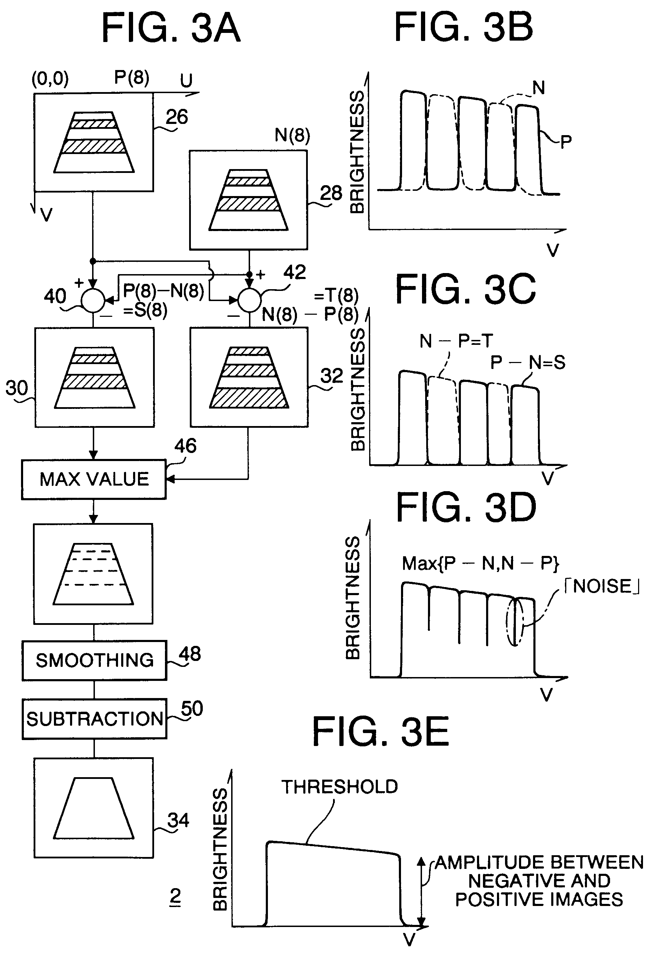

Figs.3A to 3E illustrate the process of production of the threshold image. This series of drawings depicts the structure of the image recognition device of Fig.2 in relation to the production of the threshold image. Fig.3A illustrates the flow of image data between the frame memories 26 to 34. The image of the upper surface of the work as photographed is only illustrated in Fig.3A. The shaded areas in the image represent darker areas of the work upper surface and the unshaded areas represent brighter areas as a result of slit light projection. The image in the chain-line square between the maximum value calculation unit 46 and smoothing unit 48 shows the pre-smoothing image (a frame memory is not assigned to this image in the present embodiment). Each image uses the direction where coding of the space by the slit is performed as the v direction and the direction vertical to this as the u direction with the upper left corner of the frame memory as the home position. An image of the work W is only shown in each frame memory and the peripheral background image has been omitted. It should be noted that as the space code value for the upper surface of the work W and peripheral background are different, it is simple to remove the peripheral background image from the obtained space code image.

Using the liquid crystal shutter array 6, the slit pattern is converted into 9 different types (patterns $2^0$ to $2^8$: in actuality, 18 types are given by the inversion of positive and negative). 8 positive image photographs are taken for each slit pattern as well as 8 negative image photographs for the pattern that inverses the just used slit pattern in this particular embodiment. The slit pattern may be a pure or simple binary pattern or a gray code pattern. A gray code pattern is used in the present embodiment. As a result, 8 positive images are memorized in the frame memory 26 and 8 negative images are memorized in the frame memory 28 as illustrated in Fig.3A.

A positive image P(8) and negative image N(8) (the figure 8 expresses the type of slit pattern) are used in the production of the threshold image. These are images photographed using the slit pattern with the highest space resolution. The brightness distributions along the v direction of the positive image P(8) and negative image N(8) are respectively illustrated in Fig.3B. Next, the negative image N(8) is subtracted from the positive image P(8) in the subtracting device 40 to form the difference image S(8) as illustrated in Fig.3A. Similarly, the positive image P(8) is subtracted from the negative image N(8) in the subtracting device 42 to form the difference image T(8). These two difference images are shown in Fig.3C.

The maximum values of the two difference images are determined in the maximum value calculation unit 46. More specifically, the data of each pixel in the frame memories 30 and 32 are compared with each other in the unit 46 and the larger data is output therefrom. In the current specification, if the light entering the CCD camera is zero, then "0" is assigned to the pixel, and if the entering light is the maximum, then the value 255 is assigned. The resulting image is illustrated in Fig.3D. The image obtained by subtracting the negative image from the positive image and the image obtained by subtracting the positive image from the negative image are not those having opposite signs and the same absolute value. Because of the construction of the frame memory, for pixels where the value of the positive image is larger than the value of the negative image, when the positive image is subtracted from the negative image, the pixel takes the value 0. For pixels where the value of the negative image is larger than the value of the positive image, when the negative image is subtracted from the positive image, the pixel also takes the value 0.

The symbol "Max" in Fig.3D represents a function for outputting the larger of the input data (P-N) and (N-P). Accordingly, the image P-N and the image N-P become both darker with respect to the pattern A on the work W (Fig.7A) and the threshold is correspondingly reduced in the area of the pattern A. In other words, the threshold with respect to the part with a low reflectance naturally decreases and the threshold with respect to the bright part with a high reflectance naturally increases. The influence of incoming light other than that from the projector 4 has already been removed when the positive image is subtracted from the negative image and vice versa.

When the maximum value of the image P-N and image N-P is used, the basic data for the threshold image can be obtained by a simple comparison. Alternatively, the average value of the image P-N and image N-P may be used. In this case, an averaging operation is necessary so that the total amount of calculation in preparation of the threshold value increases. Further, the threshold value obtained by this method appears is half in amplitude as shown in Fig.3F, as compared with that shown in Fig.3D. Due to this, if noise of over 1/2 the amplitude of between positive image P and negative image N is added to those parts to which no slit light is illuminated, a noise is included in image recognition.

In order to remove this kind of noise, an equation such as:

$$3/4 \times \mathrm{Max}\ (P\text{-}N,\ N\text{-}P) + 1/4 \times \mathrm{Min}\ (P\text{-}N,\ N\text{-}P)$$

may be used on the threshold. "Min" represents a function for outputting the smaller of the two image data and "Max" represents a function for outputting the larger of the two image data. In this way, the threshold has about the 3/4 the amplitude of the one shown in Fig.3D, as illustrated in Fig.3G. However, this processing is inferior to the processing using Max (P-N, N-P) as the calculation is more complicated. Accordingly it is preferable to use Max(P-N, N-P) in acquiring the basic data for the threshold image.

Noise as shown in Fig.3D remains in the output of the maximum value calculation unit 46. This is thus smoothed by the smoothing unit 48 using a filter such as a 3 x 3 or 5 x 5 type. After that, the post-smoothed data is subtracted, for example, 2 to 3 bits. This produces a threshold image slightly darker than the difference image S obtained by subtracting the negative image N from the positive image P. This is memorized in the frame memory 34 and is illustrated in Fig.3E.

Fig.5A through Fig.6B show the properties of the threshold image. Fig.5A illustrates the upper surface of the work as well as its front face. Fig.5B illustrates the brightness distributions of the positive image P and negative image N in the v-v direction and Fig.5C illustrates those in the u-u direction. In Fig.5C, the curve of the negative image N in the center area protrudes from the curve of the positive image P in the other areas since the work exists in the center area. In other words, the protruding negative image curve represents the width of the work or "range of article". The threshold images determined in the above described manner are shown by the broken line in Figs.5B and 5C respectively, and each threshold image has a slightly smaller amplitude than the amplitude of the positive image P and negative image N. In an area where the amplitude between the positive and negative images P and N is smaller such as the pattern A on the work W (Fig.7A), the threshold automatically becomes smaller and in an area of larger amplitude the threshold automatically becomes larger. In this manner, the threshold always takes an appropriate value.

Nine threshold images may be prepared for nine slit patterns, respectively. However, doing this increases the amount of data processing for preparation of the threshold images and increases the memory capacity of the threshold images as nine times as much.

The way the positive and negative images change their forms due to the change in slit pattern along the space coded direction (v direction) is shown in Figs.6A and 6B. For example, in the case of a pattern where the liquid crystal shutter array 6 is fully opened and the entire surface of the work W is illuminated (the $2^0$ pattern with the lowest space resolution), the brightness of the positive image draws the line as indicated by the solid straight line in Fig.6B. In the next $2^1$ pattern, the brightness of the positive image draws a stepwise curve as indicated by the broken line in Fig.6B. As the space resolution increases, in short, as a more complex slit pattern is used, the amplitude between the positive and negative images decreases and the base brightness increases (the base brightness of the pattern $2^1$ is indicated by the double arrow in Fig.6B). This is due to the fact that the light from the projector 4 also reaches areas shielded from the slit light as each of the slits becomes narrower, and the brightness at a position illuminated by the slit light decreases.

When the threshold image is produced using the slit pattern of the greatest space resolution (pattern $2^8$ of Fig.6B), which is the case of the present embodiment, this image has a smaller amplitude than any of the slit patterns $2^0$ to $2^7$ (i.e., the former is darker than the latter) and therefore can be used as the threshold image.

If a threshold image is produced using a slit pattern of space resolution other than $2^8$ and applied to all of the slit patterns, the threshold exceeds the amplitude of between the positive image and negative image in certain cases. In consideration of this, when only one threshold image is taken, it should be the one obtained from the two images photographed using the slit pattern of the greatest space resolution (i.e., $2^8$ pattern).

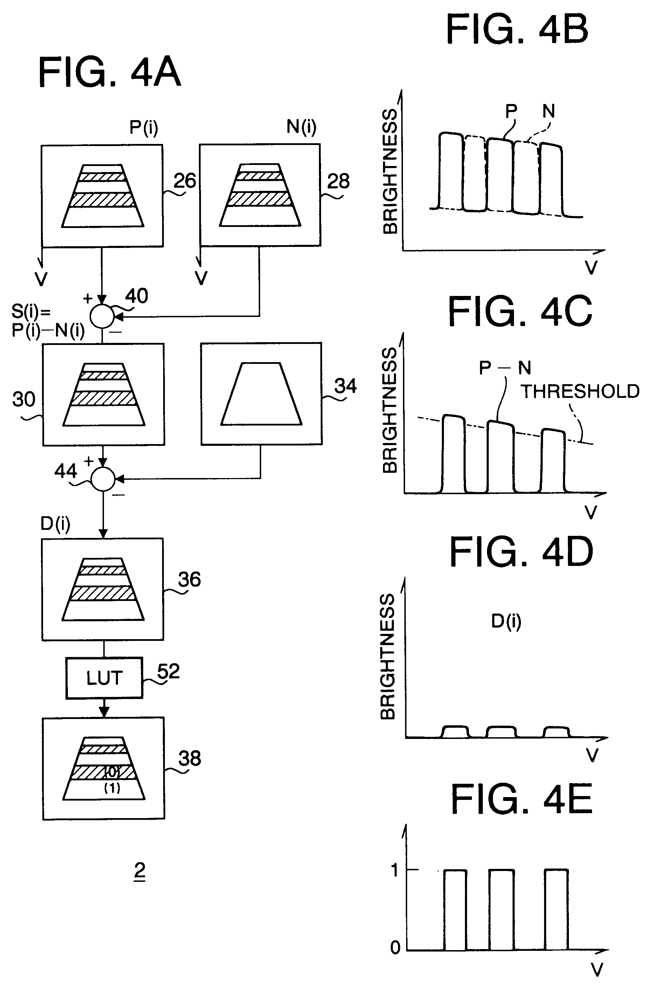

Figs.4A to 4E illustrate the processing of after obtaining the threshold image. In this process, only the image S obtained by subtracting the negative image N from the positive image P is used and the image acquired by subtracting the positive image N from the negative image P is not used. The negative image N(i) is subtracted from the positive image P(i) in the subtracting device 40 for each of Nos. 1 to 8 images and the difference images S(i) are memorized in the frame memory 30 (Fig.4C). Then, the threshold image is subtracted from each difference image in the subtracter 44 (D(i)), and the resulting images are stored in the frame memory 36 (Fig.4D). The values of images are compared with the value memorized in the LUT 52, and "1" is assigned to a pixel having a value larger than the value memorized in the LUT 52 and "0" is assigned to all else. As a result, a binary is obtained as shown in Fig.4E. This shows the value of the i'th bit plane in the space code image. This is repeated for each of the 9 slit lights such that an 8 bit wide space code image is obtained.

If a space code image may be obtained, the shape of the upper surface of the work W is determined, and the work W may be transported by a depalletizer or the like based on this.

## Claims

1. An image recognition device comprising:

     means for preparing a plurality of positive and negative images of a target article using a plurality of slit light patterns respectively;
     means for preparing a threshold image from combination of first and second difference images for each slit pattern, the first difference image obtained by subtracting a negative image from a positive image of the target article and the second difference image obtained by subtracting the positive image from the negative image for the each slit light pattern;
     means for comparing the threshold image with the first or second difference image for the each slit light pattern; and
     means for producing a space code image of the article based on comparison results.

2. The image recognition device as defined in claim 1, wherein the threshold preparation means includes maximum value calculation means for determining whether the first difference image is greater than the second difference image.

3. The image recognition device as in claim 1 or 2, wherein a single threshold image is prepared using a slit light pattern of a greatest resolution and this threshold image is utilized for comparison for all of the slit light patterns.

4. A method of recognizing an image comprising the steps of:

     A) preparing a positive image and a negative image of a target article;
     B) preparing a threshold image from combination of first and second difference images, the first difference image obtained by subtracting the negative image from the positive image of the target article and the second difference image obtained by subtracting the positive image from the negative image;
     C) comparing the threshold image with the first difference image; and
     D) producing a space code image of the article based on comparison results.

5. The method as defined in claim 4, wherein the step B) is selecting a greater difference image, the first or second difference image.

6. The method as defined in claim 5, wherein the step B) further includes the step E) of subtracting a certain value from the greater difference image obtained in the selecting step.

7. The method as defined in claim 6, wherein the step B) further includes the step F) of smoothing the greater difference image obtained in the selecting step before execution of step E).

8. The method as defined in claim 4, wherein the step D) includes the step of referring to a LUT.

9. The method as defined in claim 4, wherein the step B) is averaging the first and second difference images.

10. The method as defined in claim 4, wherein the step B) is calculating a sum of 3/4 x a greater difference image and 1/4 x a smaller difference image.

# FIG. 1

# FIG. 3F

# FIG. 3G

EP 0 805 411 A2

FIG. 2

# FIG. 3A

# FIG. 3B

# FIG. 3C

# FIG. 3D

# FIG. 3E

MAX VALUE

SMOOTHING

SUBTRACTION

# FIG. 4A

## FIG. 4B

P(i)  N(i)

26  28

V  V

$S(i) = P(i) - N(i)$

+ 40 −

30  34

44 + −

D(i)

36

LUT 52

38

(1)

2

BRIGHTNESS

P  N

V

## FIG. 4C

BRIGHTNESS

P − N
THRESHOLD

V

## FIG. 4D

BRIGHTNESS

D(i)

V

## FIG. 4E

1

1

0

V

# FIG. 5A

# FIG. 5B

FIG. 5A

FIG. 5B

BRIGHTNESS

RANGE OF ARTICLE

P

N

THRESHOLD

V – V

RANGE OF ARTICLE

THRESHOLD

N

P

THRESHOLD

U – U

# FIG. 5C

FIG. 5C

# FIG. 6A

FIG. 6A

U

V

# FIG. 6B

FIG. 6B

BRIGHTNESS

$2^1$ PATTERN

$2^0$ PATTERN

$2^8$ PATTERN

AMPLITUDE OF $2^8$ PATTERN

BASE BRIGHTNESS OF $2^1$ PATTERN

V

PRIOR ART
# FIG. 7A

PRIOR ART
# FIG. 7B

# FIG. 7E
PRIOR ART

THRESHOLD=N

# FIG. 7C
PRIOR ART

THRESHOLD
=1/2(P+N)

P − THRESHOLD

# FIG. 7D

PRIOR ART